# EUROPÄISCHE PATENTSCHRIFT

(11) **EP 2 748 030 B1**
(45) Veröffentlichungstag und Bekanntmachung des Hinweises auf die Patenterteilung: **10.08.2016**
(21) Anmeldenummer: 12735766.3
(22) Anmeldetag: 27.06.2012
(51) Int. Cl.: B60N 2/60

(54) **SCHONBEZUG FÜR DIE RÜCKENLEHNE EINES AUTOSITZES**
PROTECTIVE COVER FOR A BACKREST OF THE CAR SEAT
HOUSSE DE SIÈGE POUR LE DOSSIER D'UNE SIÈGE DE VÉHICULE AUTOMOBILE

(30) Priorität: 22.08.2011 AT 12012011
(43) Veröffentlichungstag der Anmeldung: 02.07.2014
(73) Patentinhaber: Walser Management GmbH, 6845 Hohenmens (AT)
(72) Erfinder: WALSER, Hans-Karl, 6845 Hohenems (AT)
(74) Vertreter: Hofmann, Ralf U.
(86) Internationale Anmeldenummer: PCT/AT2012/000175
(87) Internationale Veröffentlichungsnummer: WO 2013/026074

(56) Entgegenhaltungen:
- DE-A1-102004 023 643
- US-A1- 2005 253 444

## Beschreibung

Die Erfindung bezieht sich auf einen Schonbezug für die Rückenlehne eines Autositzes, welcher bezogen auf die Gebrauchslage einen über die Vorderseite der Rückenlehne sich erstreckenden vorderen Bezugabschnitts, einen über die Rückseite der Rückenlehne sich erstreckenden hinteren Bezugabschnitt, einen über die obere Schmalseite der Rückenlehne sich erstreckenden oberen Bezugabschnitt und über die seitlichen Schmalseiten der Rückenlehne sich erstreckende erste und zweite seitliche Bezugabschnitte umfasst, wobei der Schonbezug mindestens einen Reißverschluss aufweist, der zumindest im Wesentlichen über die gesamte Höhe des ersten seitlichen Bezugabschnitts und auch über zumindest einen Teil der Länge des oberen Bezugabschnitts verläuft und der einen Schieber zum Öffnen des Reißverschlusses aufweist, wobei der Reißverschluss vom Schieber von einem ersten Ende her öffenbar ist, wobei die beiden Reißverschlussbänder im geöffneten Zustand des Reißverschlusses am ersten Ende des Reißverschlusses unverbunden sind und das erste Ende des Reißverschlusses am unteren Rand des ersten seitlichen Bezugabschnitts liegt oder an einen vom unteren Rand des ersten seitlichen Bezugabschnitts ausgehenden Schlitz anschließt.

Bekannt sind Schonbezüge für Kraftfahrzeugsitze, welche einen Sitzbezug und einen sackartigen Rückenlehnenbezug zum Bezug des Sitzteils und der Rückenlehne des Kraftfahrzeuges umfassen. Der Sitzbezug und der Rückenlehnenbezug können dabei einteilig ausgeführt sein, lösbar miteinander verbunden sein oder als separate Teile ausgebildet sein.

Zum Durchtritt von Verankerungsstäben von Kopfstützen ist es aus der AT 406036 B bekannt, in einem oberen Bezugabschnitt, der über die obere Schmalseite der Rückenlehne verläuft, einen von einem Band unterlegten Schlitz vorzusehen. Der Benutzer schneidet in dieses Band an den zum Durchtritt der Verankerungsstäbe gewünschten Stellen Löcher ein.

Ein gattungsgemässer Rückenlehnenbezug geht aus der DE 10 2004 023 643 A1 hervor. Der Schonbezug umfasst zwei Reißverschlüsse, die jeweils über einen der beiden seitlichen Bezugabschnitte, welche sich über die seitlichen Schmalseiten der Rückenlehne erstrecken, und über einen Teil des oberen Bezugabschnitts, der sich über die obere Schmalseite der Rückenlehne erstreckt, verlaufen. Der Schieber des jeweiligen Reißverschlusses befindet sich im montierten Zustand des Bezuges am unteren Ende des jeweiligen Reißverschlusses, das sich am unteren Ende des jeweiligen seitlichen Bezugabschnitts befindet. Zwischen den anderen Enden der beiden Reißverschlüsse befindet sich im oberen Bezugabschnitt eine Öffnung zum Durchtritt der Verankerungsstäbe der Kopfstütze. Im mittleren Bereich dieser Öffnung ist weiters eine Lasche auf einer Seite der Öffnung am oberen Bezugabschnitt angenäht und auf der anderen Seite der Öffnung mit dem oberen Bezugabschnitt verbindbar. Diese Lasche verhindert ein Aufklaffen der Öffnung im Bereich zwischen den beiden Verankerungsstäben der Kopfstütze.

Ein Problem bei diesem herkömmlichen Schonbezug besteht darin, dass Autositze teilweise mit Bedienelementen ausgestattet sind, die insbesondere im Bereich der vom anderen Fahrzeugsitz weggerichteten seitlichen Schmalseite der Rückenlehne des Autositzes angeordnet sind, z.B. in Form von über die Schmalseite vorstehenden Bedienhebeln. Um die Zugänglichkeit von solchen Bedienelementen bei angelegtem Schonbezug zu bewahren, müsste der Schonbezug an das spezielle Modell des Autositzes angepasst sein und entsprechende Öffnungen in den Seitenabschnitten des Schonbezugs aufweisen oder der Schonbezug müsste derart ausgebildet sein, dass die seitliche Schmalseite des Autositzes zumindest weitgehend unbedeckt ist.

Aus der US 2005/0253444 A1 geht eine nicht gattungsgemäße Transportvorrichtung für Haustiere hervor, bei der ein auf dem Rücksitz aufliegendes Abteil für das

Haustier ausgebildet ist. Die über die Vorderseite der Rücksitzbank sich erstreckende Wand des Abteils besitzt einen Reißverschluss, bei dem zwischen Schiebern Öffnungen zum Durchtritt der Gurtrasten ausgebildet werden.

Aufgabe der Erfindung ist es einen Schonbezug der eingangs genannten Art bereitzustellen, der bei einem ansprechenden Aussehen eine einfache Anpassung an unterschiedliche Autositze ermöglicht. Erfindungsgemäß gelingt dies durch einen Schonbezug mit den Merkmalen des Anspruchs 1.

Beim Schonbezug gemäß der Erfindung weist der Reißverschluss zusätzlich zu einem Schieber zum Öffnen des Reißverschlusses mindestens ein Paar von Zusatzschiebern auf, zwischen denen eine Öffnung im Reißverschluss ausgebildet werden kann, die durch diese beiden Zusatzschieber begrenzt wird. Es kann dadurch an einer beliebigen Stelle des Reißverschlusses eine Durchgangsöffnung durch den Schonbezug ausgebildet werden, durch welche ein an der Rückenlehne im Bereich ihrer seitlichen Schmalseite, über welche der Reißverschluss verläuft, angeordnetes Bedienelement zugänglich gemacht werden kann bzw. durch den Schonbezug hindurchgeführt werden kann.

Der mindestens eine erfindungsgemäße Reißverschluss weist somit insgesamt mindestens drei Schieber auf.

Der Reißverschluss ist durch den genannten Schieber von einem ersten Ende her öffenbar, wobei die beiden Reißverschlussbänder im geöffneten Zustand des Reißverschlusses an diesem ersten Ende unverbunden sind. Das erste Ende des Reißverschlusses liegt hierbei am unteren Rand des ersten seitlichen Bezugabschnitts oder schließt an einen vom unteren Ende des ersten seitlichen Bezugabschnitts ausgehenden Schlitz an. Durch Verstellen des Schiebers kann somit ein vom unteren Rand des ersten seitlichen Bezugabschnitts ausgehender Schlitz ausgebildet werden bzw. die Länge eines solchen Schlitzes eingestellt werden. Im Bereich dieses Schlitzes kann z.B. ein Handrad zur Erstellung der Neigung der Rückenlehne liegen.

Am anderen Ende des Reißverschlusses (=zweites Ende) können die beiden Reißverschlussbänder dauerhaft miteinander verbunden sein oder es kann ein weiterer einzelner Schieber vorgesehen sein, mit dem der Reißverschluss von diesem zweiten Ende her öffenbar ist, um einen zu diesem Ende hin offenen Schlitz auszubilden.

Es ist somit zusätzlich zum einzelnen Schieber am ersten Ende oder zu den beiden einzelnen Schiebern am ersten und am zweiten Ende des Reißverschlusses mindestens ein dazwischen liegendes Paar von Zusatzschiebern vorhanden.

Ein erfindungsgemäßer Reißverschluss erstreckt sich im Weiteren zumindest im Wesentlichen über die gesamte Länge des oberen Bezugabschnitts.

Günstigerweise kann vom Zusatzschieberpaar und/oder vom Schieberpaar auch eine Öffnung zum Durchtritt einer Kopfstütze oder eines Verankerungsstabes für eine Kopfstütze ausgebildet werden.

In einer vorteilhaften Ausführungsform der Erfindung weist der Reißverschluss zusätzlich zum Schieber mindestens zwei Paare von Zusatzschiebern auf, zwischen denen jeweils eine Durchgangsöffnung durch den Schonbezug ausgebildet werden kann. Vom Schieber kann hierbei beispielsweise wiederum der erste seitliche Bezugabschnitt von einem Ende, vorzugsweise dem unteren Ende, her geöffnet werden oder der Schieber bildet wiederum zusammen mit einem weiteren Schieber ein Schieberpaar, zwischen denen eine Durchgangsöffnung durch den Schonbezug ausgebildet werden kann.

Auf diese Weise können unterschiedliche Anpassungsmöglichkeiten des Schonbezuges, beispielsweise zum Zugänglichmachen oder Durchtritt mindestens eines Bedienelementes der Rückenlehne und zum Durchtritt der Kopfstütze oder der Verankerungsstäbe der Kopfstütze bereitgestellt werden.

Reißverschlüsse, die von beiden Enden her durch einen jeweiligen Schieber geöffnet werden können, werden auch als Zwei-Wege-Reißverschlüsse bezeichnet. Diese Bezeichnung wird auch für bekannte Reißverschlüsse verwendet, deren Reißverschlussbänder an beiden Enden dauerhaft miteinander verbunden sind und die ein Schieberpaar aufweisen, zwischen denen eine Öffnung mit einer gewünschten Größe ausgebildet werden kann. Solche Reißverschlüsse kommen insbesondere bei Rucksäcken oder Taschen zum Einsatz.

Weitere Vorteile und Einzelheiten der Erfindung werden im Folgenden anhand der beiliegenden Zeichnung erläutert. In dieser zeigen:
Fig. 1 eine mögliche Ausbildungsform eines Autositzes, dessen Rückenlehne mit einem Schonbezug gemäß einem Ausführungsbeispiel der Erfindung bezogen ist, in einer Schrägsicht von schräg vorne;
Fig. 2 eine Schrägsicht aus einer anderen Blickrichtung von schräg vorne, aus der der andere seitliche Bezugabschnitt sichtbar ist;
Fig. 3 eine Schrägsicht des Autositzes mit dem Schonbezug von schräg hinten, die Kopfstütze der Übersichtlichkeit halber abgenommen;
Fig. 4 einen vergrößerten Ausschnitt von Fig. 1 im Bereich eines Bedienelements der Rückenlehne;
Fig. 5 einen vergrößerten Ausschnitt von Fig. 1 im Bereich des Durchtritts der Verankerungsstäbe für die Kopfstütze;
Fig. 6 einen Ausschnitt entsprechend Fig. 5 mit einer anderen möglichen Anordnung der Zusatzschieber;
Fig. 7 und 8 Darstellungen des Schonbezuges ohne den Autositz in einer Schrägsicht von schräg vorne und schräg hinten.

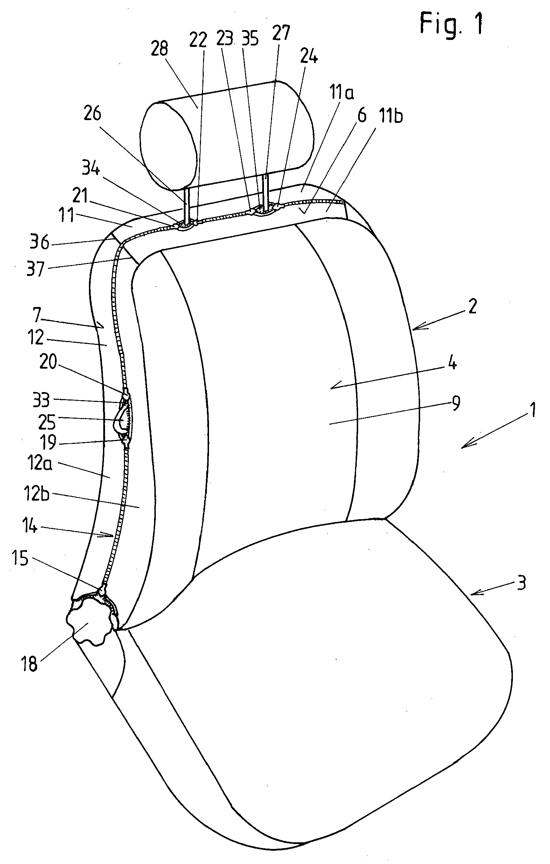

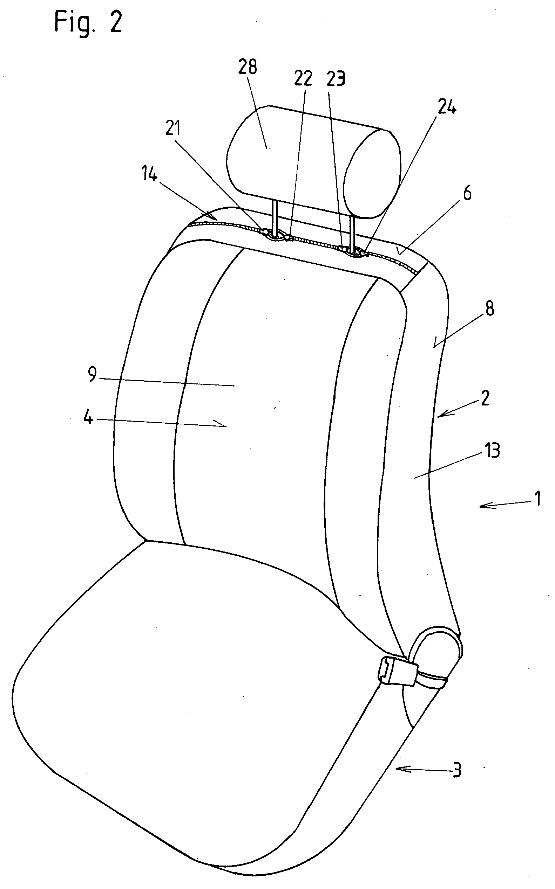

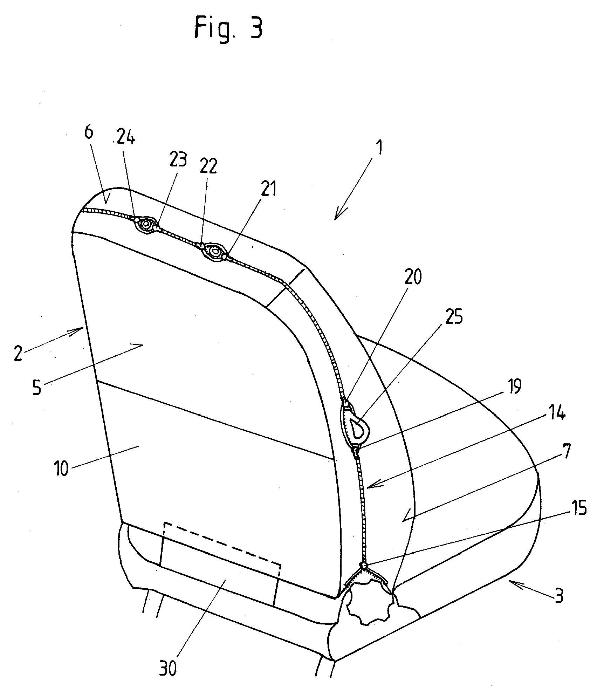

Eine Ausführungsform eines erfindungsgemäßen Schonbezuges ist in den Fig. 1 bis 8 dargestellt. Der Schonbezug dient zum Überziehen der Rückenlehne 2 eines Autositzes 1, um den eigenen Rückenlehnenbezug des Autositzes zu schonen bzw. das Aussehen des Autositzes zu verändern. Zum Bezug des Sitzteils 3 des Autositzes 1 dient bei dieser Ausführungsform ein separater (nicht dargestellter) Schonbezug.

Bezogen auf seine Gebrauchslage, also im auf die Rückenlehne 2 montierten Zustand, umfasst der Schonbezug einen vorderen Bezugabschnitt 9, der sich über die Vorderseite 4 der Rückenlehne 2 erstreckt, einen hinteren Bezugabschnitt 10, der sich über die Rückseite 5 der Rückenlehne 2 erstreckt, einen oberen Bezugabschnitt 11, der sich über die obere Schmalseite 6 der Rückenlehne 2 erstreckt, einen ersten seitlichen Bezugabschnitt 12, der sich über die erste seitliche Schmalseite 7 der Rückenlehne 2 erstreckt, und einen zweiten seitlichen Bezugabschnitt 13, der sich über die zweite seitliche Schmalseite 8 der Rückenlehne erstreckt. Die entsprechenden Seiten 4-8 der Rückenlehne 2 sind im gezeigten Ausführungsbeispiel jeweils vollständig bzw. zumindest im Wesentlichen vollständig (d.h. zu mehr als 90%) vom jeweiligen Bezugabschnitt überdeckt. In anderen Ausführungsbeispielen können eine oder mehrere der Seiten 4-8 der Rückenlehne 2 auch nur teilweise, vorzugsweise zumindest großteils (d.h. über 50%), vom zugehörigen Bezugabschnitt 9-13 überdeckt sein.

Der Schonbezug weist einen Reißverschluss 14 auf, der im gezeigten Ausführungsbeispiel über die gesamte Längserstreckung, d.h. die gesamte Höhe des ersten seitlichen Bezugabschnitts 12 und über die gesamte Längserstreckung des oberen Bezugabschnitts 11 verläuft.

Die Längserstreckung des oberen Bezugabschnitts 11 ist die Richtung seines Verlaufs vom einen seitlichen Bezugabschnitt 12 zum anderen seitlichen Bezugabschnitt 13. Wenn die seitlichen Schmalseiten 7, 8 der Rückenlehne 2 mit der oberen Schmalseite 6 der Rückenlehne 2 über einen Radius verbunden sind, so wird als Grenze zwischen dem oberen und dem jeweiligen seitlichen Bezugabschnitt die Stelle angesetzt, an welcher eine an den gekrümmten Verlauf der Rückenlehne angelegte Tangente einen Winkel von 45° mit einer horizontalen Ebene einschließt.

Im gezeigten Ausführungsbeispiel werden die unterschiedlichen Bezugabschnitte 9-13 jeweils von unterschiedlichen Materialteilen (beispielsweise Stoffteilen und/oder Lederteilen und/oder Folienteilen) gebildet, die durch Nähe miteinander verbunden sind. Ein jeweiliger Bezugabschnitt 9-13 kann hierbei mehrere miteinander verbundene Materialteile umfassen.

In anderen möglichen Ausbildungsformen könnten zwei oder mehr Bezugabschnitte 9-13 oder Teile hiervon einteilig miteinander ausgebildet sein, also von einem gemeinsamen Materialteil gebildet werden. So könnten beispielsweise der vordere Bezugabschnitt 9 und ein erster Teilabschnitt 12b des ersten seitlichen Bezugabschnitts 12, der auf der einen Seite des Reißverschlusses 14 liegt, einteilig miteinander ausgebildet sein und der hintere Bezugabschnitt 10 und ein zweiter Teilabschnitt 12a des ersten seitlichen Bezugabschnitts, der auf der anderen Seite des Reißverschlusses liegt, einteilig miteinander ausgebildet sein. Beispielsweise könnten sich auch Materialteile, die die beidseitig des Reißverschlusses 14 liegenden Teilabschnitte 11 a, 11 b des oberen Bezugabschnitts 11 bilden, bis in den ersten seitlichen Bezugabschnitt 12 hinein erstrecken und somit auch Teile der beidseitig des Reißverschlusses 14 liegenden Teilabschnitte 12a, 12b des ersten seitlichen Bezugabschnitts 12 bilden (die beidseitig des Reißverschlusses 14 liegenden und quer zu diesem verlaufenden Nähte 36, 37 würden dann nicht an der Stelle des Überganges zwischen dem oberen Bezugabschnitt 11 und dem ersten seitlichen Bezugabschnitt 12 sondern innerhalb des ersten seitlichen Bezugabschnitts 12 liegen).

Insgesamt bildet der Schonbezug im geschlossenen Zustand des Reißverschlusses 14 eine einseitig (im Montagezustand nach unten) offene Hülle, d.h. ist sackförmig ausgebildet.

Der Reißverschluss 14 verläuft günstigerweise etwa in der Mitte (bezogen auf die kürzere Erstreckung bzw. Breitenerstreckung) des ersten seitlichen Bezugabschnitts 12 und des oberen Bezugabschnitts 11.

Der Reißverschluss 14 weist einen Schieber 15 auf, mit dem der Reißverschluss 14 von einem Ende her geöffnet werden kann. Dieses Ende liegt im Ausführungsbeispiel am unteren Rand des ersten seitlichen Bezugabschnitts 12. Wenn der Schieber 15 ausgehend von diesem ersten Ende des Reißverschlusses 14 geöffnet wird, sind die beiden Reißverschlussbänder 16,17, die mit den Zähnen des Reißverschlusses versehen sind, am ersten Ende unverbunden, d.h. ein zum ersten Ende des Reißverschlusses 14 hin offener Schlitz wird ausgebildet.

Damit kann der Schieber 15 beispielsweise so weit hinaufgeschoben werden, dass ein im Bereich des unteren Randes des ersten seitlichen Bezugabschnitts 12 gelegenes Handrad 18, mit dem die Neigung der Rückenlehne 12 verstellbar ist, frei zugänglich bleibt und hierbei zumindest teilweise im Bereich des durch den Schieber 15 freigegebenen, auseinandergezogenen Schlitzes liegt.

Der Reißverschluss 14 weist zusätzlich zum Schieber 15 drei Paare von Zusatzschiebern 19, 20; 21, 22; 23, 24 auf. Die beiden Zusatzschieber eines jeweiligen Paars sind jeweils mit ihren Offenseiten (als Offenseite wird diejenige Seite des Schiebers bezeichnet, auf der die beiden Reißverschlussbänder 16,17 im geöffneten Zustand aus dem Schieber heraustreten) zueinander gerichtet. Werden die beiden Zusatzschieber 19, 20; 21, 22; 23, 24 eines jeweiligen Paars auseinandergezogen, so wird eine jeweilige Öffnung 33, 34, 35 des Reißverschlusses 14 ausgebildet, die sich vom einen bis zum anderen Zusatzschieber eines jeweiligen Paars erstreckt.

Wie aus den Fig. 1, 3 und 4 ersichtlich ist, wird ein solches Paar von Zusatzschiebern 19, 20 dazu verwendet, um einen Durchgang (=Öffnung 33) für ein im Bereich der ersten seitlichen Schmalseite 7 angeordnetes Bedienelement 25 des Autositzes 1 zu schaffen.

Die beiden weiteren Paare von Zusatzschiebern 21, 22; 23, 24 werden dazu verwendet, um Durchgänge (=Öffnungen 34, 35) für die beiden Verankerungsstäbe 26, 27 einer Kopfstütze 28 zu schaffen, vgl. Fig. 1 bis 3 und 5.

Es können damit Durchgangsöffnungen mit gewünschter Größe an beliebigen Orten entlang des Verlaufes des Reißverschlusses 14 ausgebildet werden.

Damit der Schieber 15 und die Zusatzschieber 19-24 möglichst unauffällig sind, sind diese vorzugsweise ohne Schiebergriffe ausgebildet.

Der Reißverschluss 14 ist vorzugsweise als nahtverdeckter Reißverschluss, der auch als Nahtreißverschluss oder verdeckter Reißverschluss bezeichnet wird, ausgebildet. Hierbei verdecken Stoffstreifen der Reißverschlussbänder 16,17 in bekannter Weise auf der Außenseite des Reißverschlusses die Zähnchen des Reißverschlusses (die evtl. auch von einer Spirale bzw. Helix ausgebildet werden können) weitgehend.

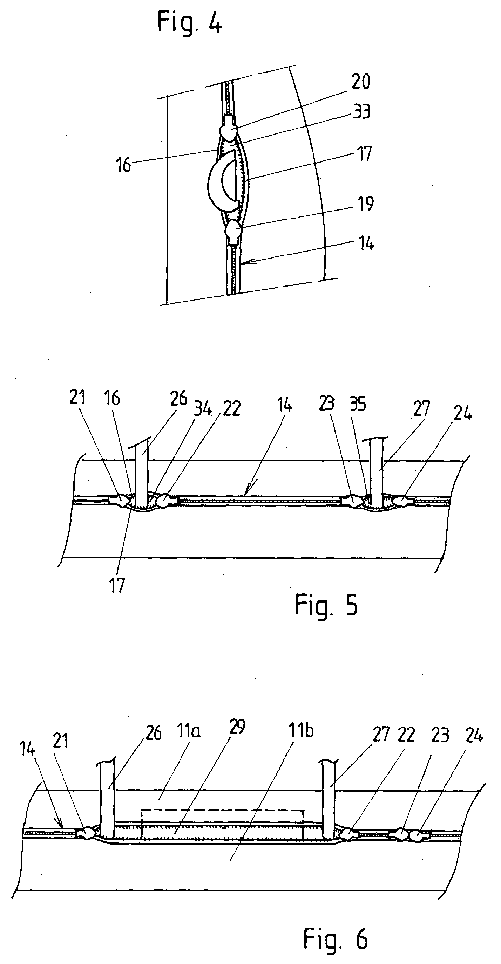

Fig. 6 zeigt eine andere mögliche Konfiguration, wobei von einem Paar 21, 22 von Zusatzschiebern eine gemeinsame Durchtrittsöffnung zum Durchtritt beider Verbindungsstäbe 26, 27 der Kopfstütze 28 ausgebildet ist. Eine solche Konfiguration eignet sich beispielsweise für Kopfstützen, die nicht von der Rückenlehne 2 abnehmbar sind. Damit die Durchtrittsöffnung im Bereich zwischen den beiden Verankerungsstäben 26, 27 nicht auseinanderklafft, ist günstigerweise eine Verbindungslasche 29 vorgesehen, die am auf einer Seite des Reißverschlusses 14 liegenden Teilabschnitt 11 b des oberen Bezugabschnitts 11 angenäht ist und mit dem anderen Teilabschnitt 11a über einen Klettverschluss verbindbar ist.

Wenn die Verbindungslasche 29 nicht benötigt wird, kann diese unter den Teilabschnitt 11 b untergeschlagen werden.

Die in Fig. 6 dargestellte Konfiguration, aber ohne Benutzung der Verbindungslasche 29, eignet sich beispielsweise auch für Autositze, bei denen die Kopfstütze in die Rückenlehne integriert ist.

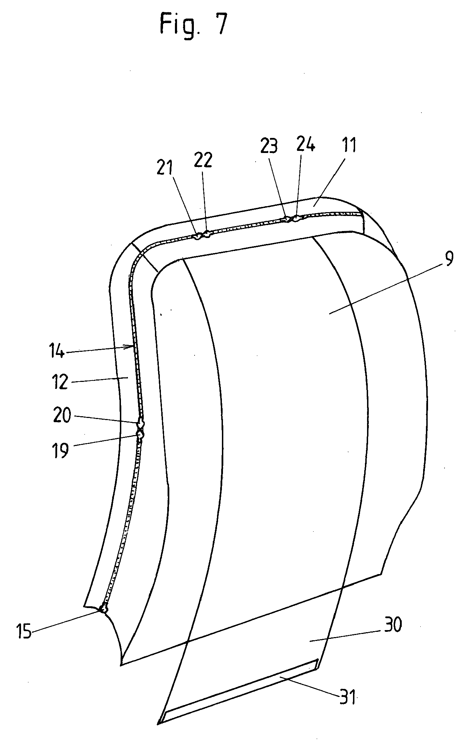

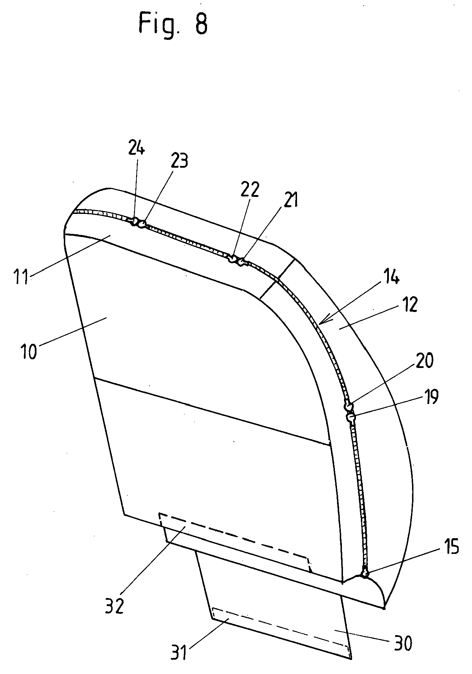

Um den vorderen Bezugabschnitt 9 im an die Rückenlehne 2 angelegten Zustand des Schonbezuges mit dem hinteren Bezugabschnitt 10 im Bereich von deren unteren Enden zu verbinden, ist am vorderen Bezugabschnitt 9 eine Verbindungslasche 30 angeordnet (beispielsweise einteilig mit diesem ausgebildet oder an diesem angenäht), die durch den Schlitz zwischen der Rückenlehne 2 und dem Sitzteil 3 gezogen wird und über einen Klettverschluss mit dem hinteren Bezugabschnitt 10 verbunden wird. Verschlussteile 31, 32 des Klettverschlusses sind in Fig. 7 und 8 angedeutet. Die Verbindungslasche 30 könnte stattdessen auch am hinteren Bezugabschnitt 10 angeordnet sein.

Ein erfindungsgemäßer Schonbezug könnte auch mehr oder weniger Paare von Zusatzschiebern 19-24 aufweisen.

Der Reißverschluss 14 erstreckt sich über zumindest im Wesentlichen die gesamte Höhe des ersten seitlichen Bezugabschnitts 12 und zumindest im Wesentlichen die gesamte Länge des oberen Bezugabschnitts 11.

Im gezeigten Ausführungsbeispiel erstreckt sich der Reißverschluss 14 nicht über den zweiten seitlichen Bezugabschnitt 13. Günstigerweise wird der zweite seitliche Bezugabschnitt 13 von einer geschlossenen Lage gebildet. Diese weist also auch keine Reißverschlüsse auf. Öffnungen in diesem zweiten seitlichen Bezugabschnitt 13 können entfallen, da im Bereich der zweiten seitlichen Schmalseite 8 der Rückenlehne 2 des Autositzes 1, welche dem daneben angeordneten Autositz zugewandt ist, üblicherweise keine Bedienelemente angeordnet sind.

Stattdessen könnte sich der Reißverschluss 14 in einer weiteren möglichen Ausführungsform nicht nur über zumindest einen Großteil der Höhe des ersten seitlichen

Bezugabschnitts 12 und die Länge des oberen Bezugabschnitts 11 erstrecken sondern über diesen hinaus in den zweiten seitlichen Bezugabschnitt 13 hinein verlaufen und sich zumindest über einen Teil, vorzugsweise Großteil, der Höhe des zweiten seitlichen Bezugabschnitts 13 erstrecken, beispielsweise bis zu dessen unteren Rand verlaufen. Am zweiten Ende des Reißverschlusses 14 könnte hierbei ein weiterer einzelner Schieber vorgesehen sein, mit dem der Reißverschluß 14 ausgehend von diesem zweiten Ende geöffnet werden kann, also ein zu diesem zweiten Ende hin offener Schlitz ausgebildet werden kann.

In einer weiteren möglichen Ausführungsform könnte vorgesehen sein, dass ein separater zweiter Reißverschluss zumindest über einen Großteil der Höhe des zweiten seitlichen Bezugabschnitts 13 verläuft. Der zweite Reißverschluss würde günstigerweise ebenfalls etwa in der Mitte (bezogen auf die kürzere Erstreckung bzw. Breitenerstreckung) des zweiten seitlichen Be-zugabschnitts 13 und gegebenenfalls des oberen Bezugabschnitts 11 verlaufen.

Im gezeigten Ausführungsbeispiel erstreckt sich der Reißverschluss 14 im ersten seitlichen Bezugabschnitt 12 bis zum unteren Rand. Stattdessen könnte beispielsweise auch vorgesehen sein, dass vom unteren Rand des ersten seitlichen Bezugabschnitts 12 ein Schlitz ausgeht, an den der Reißverschluss 14 mit seinem ersten Ende anschließt. Wird der Schieber 15 ausgehend vom ersten Ende des Reißverschlusses 14 nach oben geschoben, so vergrößert sich somit die Länge eines vom unteren Rand des ersten seitlichen Bezugabschnitts 12 ausgehenden Schlitzes.

Um das Öffnen eines Seitenairbags zu ermöglichen, könnte in bekannter Weise mindestens eine Aufreißnaht vorgesehen sein, beispielsweise zwischen dem ersten seitlichen Bezugabschnitt 12 und dem hinteren Bezugabschnitt 10 und/oder zwischen dem ersten seitlichen Bezugabschnitt 12 und dem vorderen Bezugabschnitt 9. Denkbar und möglich wäre es auch, dass der erste seitliche Bezugabschnitt 12 nicht mit dem vorderen Bezugabschnitt 9 oder nicht mit dem hinteren Bezugabschnitt 11 verbunden ist und nur unter den entsprechenden Bezugabschnitt 9, 10 untergeschoben wird, wobei der vordere Bezugabschnitt 9 und der hintere Bezugabschnitt 10 vorzugsweise über mindestens ein weiteres über die erste seitliche Schmalseite 7 verlaufendes Zugmittel miteinander verbunden sind, wie dies aus dem eingangs genannten Stand der Technik entsprechend der DE 10 2004 023 643 A1 bekannt ist.

Wie erwähnt dient das gezeigte Ausführungsbeispiel des Schonbezugs nur zum Beziehen der Rückenlehne 2 des Autositzes 1 und der Sitzteil 3 kann, falls gewünscht, mit einem separaten Schonbezug überzogen werden. Ein erfindungsgemäßer Schonbezug könnte auch weitere Abschnitte zum Bezug des Sitzteils 3 aufweisen, mit denen die Abschnitte zum Bezug der Rückenlehne 2 zumindest teilweise verbunden sind oder verbindbar sind oder auch einteilig ausgebildet sind.

**Legende zu den Hinweisziffern:**

| | | | |
|---|---|---|---|
| 1 | Autositz | 23 | Zusatzschieber |
| 2 | Rückenlehne | 24 | Zusatzschieber |
| 3 | Sitzteil | 25 | Bedienelement |
| 4 | Vorderseite | 26 | Verankerungsstab |
| 5 | Rückseite | 27 | Verankerungsstab |
| 6 | obere Schmalseite | 28 | Kopfstütze |
| 7 | erste seitliche Schmalseite | 29 | Verbindungslasche |
| 8 | zweite seitliche Schmalseite | 30 | Verbindungslasche |
| 9 | vorderer Bezugabschnitt | 31 | Verschlussteil |
| 10 | hinterer Bezugabschnitt | 32 | Verschlussteil |
| 11 | oberer Bezugabschnitt | 33 | Öffnung |
| 11a | Teilabschnitt | 34 | Öffnung |
| 11b | Teilabschnitt | 35 | Öffnung |
| 12 | erster seitlicher Bezugabschnitt45 | 36 | Naht |
| 12a | Teilabschnitt | 37 | Naht |
| 12b | Teilabschnitt | | |
| 13 | zweiter seitlicher Bezugabschnitt | | |
| 14 | Reißverschluss | | |
| 15 | Schieber | | |
| 16 | Reißverschlussband | | |
| 17 | Reißverschlussband | | |
| 18 | Handrad | | |
| 19 | Zusatzschieber | | |
| 20 | Zusatzschieber | | |
| 21 | Zusatzschieber | | |
| 22 | Zusatzschieber | | |

## Patentansprüche

1. Schonbezug für die Rückenlehne (2) eines Autositzes (1), welcher bezogen auf die Gebrauchslage einen über die Vorderseite (4) der Rückenlehne (2) sich erstreckenden vorderen Bezugabschnitt (9), einen über die Rückseite (5) der Rückenlehne (2) sich erstreckenden hinteren Bezugabschnitt (10), einen über die obere Schmalseite (6) der Rückenlehne (2) sich erstreckenden oberen Bezugabschnitt (11) und über die seitlichen Schmalseiten (7, 8) der Rückenlehne (2) sich erstreckende erste und zweite seitliche Bezugabschnitte (12, 13) umfasst, wobei der Schonbezug mindestens einen Reißverschluss (14) aufweist, der zumindest im Wesentlichen über die gesamte Höhe des ersten seitlichen Bezugabschnitts (12) und auch über zumindest einen Teil der Länge des oberen Bezugabschnitts (11) verläuft und der einen Schieber (15) zum Öffnen des Reißverschlusses aufweist, wobei der Reißverschluss (14) vom Schieber (15) von einem ersten Ende her öffenbar ist, wobei die beiden Reißverschlussbänder (16, 17) im geöffneten Zustand des Reißverschlusses (14) am ersten Ende des Reißverschlusses unverbunden sind und das erste Ende des Reißverschlusses (14) am unteren Rand des ersten seitlichen Bezugabschnitts (12) liegt oder an einen vom unteren Rand des ersten seitlichen Bezugabschnitts (12) ausgehenden Schlitz anschließt, **dadurch gekennzeichnet, dass** der Reißverschluss (14) zusätzlich zum Schieber (15) zumindest ein Paar von Zusatzschiebern (19, 20; 21, 22; 23, 24) zur Ausbildung einer Öffnung (33, 34, 35) des Reißverschlusses (14) zwischen den Zusatzschiebern (19, 20; 21, 22; 23, 24) aufweist und dass sich der Reißverschluss (14) zumindest im Wesentlichen über die gesamte Länge des oberen Bezugabschnitts (11) erstreckt.

2. Schonbezug nach Anspruch 1, **dadurch gekennzeichnet, dass** der Reißverschluss (14) bezogen auf die kürzere Breitenerstreckung des ersten seitlichen Bezugabschnitts (12) im Bereich der Mitte des ersten seitlichen Bezugabschnitts (12) verläuft.

3. Schonbezug nach Anspruch 1 oder 2, **dadurch gekennzeichnet, dass** der Reißverschluss (14) bezogen auf die kürzere Breitenerstreckung des oberen Bezugabschnitts (11) im Bereich der Mitte des oberen Bezugabschnitts (11) verläuft.

4. Schonbezug nach einem der Ansprüche 1 bis 3, **dadurch gekennzeichnet, dass** der Reißverschluss (14) zumindest zwei Paare von Zusatzschiebern (19, 20; 21, 22; 23, 24) zur Ausbildung einer jeweiligen Öffnung (33, 34, 35) zwischen den beiden Zusatzschiebern (19, 20; 21, 22; 23, 24) eines jeweiligen Paars aufweist.

5. Schonbezug nach Anspruch 4, **dadurch gekennzeichnet, dass** der Reißverschluss (14) zumindest drei Paare von Zusatzschiebern (19, 20; 21, 22; 23, 24) zur Ausbildung einer jeweiligen Öffnung (33, 34, 35) zwischen den beiden Zusatzschiebern (19, 20; 21, 22; 23, 24) eines jeweiligen Paars aufweist.

6. Schonbezug nach einem der Ansprüche 1 bis 5, **dadurch gekennzeichnet, dass** der Reißverschluss als nahtverdeckter Reißverschluss (14) ausgebildet ist.

7. Schonbezug nach einem der Ansprüche 1 bis 6, **dadurch gekennzeichnet, dass** der Schonbezug im geschlossenen Zustand des mindestens einen Reißverschlusses (14) des Schonbezuges eine nur einseitig offene Hülle ausbildet.

## Claims

1. A protective cover for the backrest (2) of a car seat (1), this protective cover including, in relation to the position of use, a front cover portion (9) that extends over the front side (4) of the backrest (2), a rear cover portion (10) that extends over the rear side (5) of the backrest (2), an upper cover portion (11) that extends over the upper short side (6) of the backrest (2), and first and second lateral cover portions (12, 13) that extend over the lateral short sides (7, 8) of the backrest (2), wherein the protective cover has at least one zip fastener (14) which runs at least substantially over the entire height of the first lateral cover portion (12) and also over at least some of the length of the upper cover portion (11), and which has a slider (15) for opening the zip fastener, wherein the zip fastener (14) is openable from a first end by the slider (15), wherein the two zip fastener tapes (16, 17) are unconnected at the first end of the zip fastener in the opened condition of the zip fastener (14) and the first end of the zip fastener (14) lies at the lower edge of the first lateral cover portion (12) or adjoins a slot that starts from the lower edge of the first lateral cover portion (12), **characterised in that** the zip fastener (14) has, in addition to the slider (15), at least one pair of additional sliders (19, 20; 21, 22; 23, 24) for forming an opening (33, 34, 35) in the zip fastener (14) between the additional sliders (19, 20; 21, 22; 23, 24), and **in that** the zip fastener (14) extends at least substantially over the entire length of the upper cover portion (11).

2. A protective cover according to Claim 1, **characterised in that** the zip fastener (14) runs, in relation to the shorter, widthways extent of the first lateral cover portion (12), in the region of the centre of the first lateral cover portion (12).

3. A protective cover according to Claim 1 or 2, **characterised in that** the zip fastener (14) runs, in relation to the shorter, widthways extent of the upper cover portion (11), in the region of the centre of the upper cover portion (11).

4. A protective cover according to one of Claims 1 to 3, **characterised in that** the zip fastener (14) has at least two pairs of additional sliders (19, 20; 21, 22; 23, 24) for forming a respective opening (33, 34, 35) between the two additional sliders (19, 20; 21, 22; 23, 24) of a respective pair.

5. A protective cover according to Claim 4, **characterised in that** the zip fastener (14) has at least three pairs of additional sliders (19, 20; 21, 22; 23, 24) for forming a respective opening (33, 34, 35) between the two additional sliders (19, 20; 21, 22; 23, 24) of a respective pair.

6. A protective cover according to one of Claims 1 to 5, **characterised in that** the zip fastener takes the form of a concealed zip fastener (14).

7. A protective cover according to one of Claims 1 to 6, **characterised in that**, in the closed condition of the at least one zip fastener (14) of the protective cover, the protective cover forms a sheath that is open only on one side.

## Revendications

1. Housse destinée au dossier (2) d'un siège de véhicule (1) qui comprend, par rapport à la position d'utilisation, un segment de housse avant (9) s'étendant sur la face avant (4) du dossier, un segment de housse arrière (10) s'étendant sur la face arrière (5) du dossier (2), un segment de housse supérieur (11) s'étendant sur le petit côté supérieur du dossier (2) et un premier et un second segment latéral (12, 13) s'étendant sur les petits côtés latéraux (7, 8) du dossier (2), cette housse comportant au moins une fermeture à glissière (14) qui s'étend au moins essentiellement sur la totalité de la hauteur du premier segment de housse latéral (12) et également sur au moins une partie de la longueur du segment de housse supérieur (11) et comporte un curseur (15) pour permettre d'ouvrir la fermeture à glissière, la fermeture à glissière (14) pouvant être ouverte par le curseur (15) à partir d'une première extrémité, les deux bandes de la fermeture à glissière (16, 17) n'étant pas reliées au niveau de la première extrémité de la fermeture à glissière, lorsque cette fermeture à glissière est à l'état ouvert, et la première extrémité de la fermeture à glissière (14) étant située au niveau du bord inférieur du premier segment de housse latéral (12) ou se raccordant à une fente partant du bord inférieur du premier segment de housse latéral (12),
**caractérisée en ce que**
la fermeture à glissière (14) comprend, en plus du curseur (15), au moins une paire de curseurs supplémentaires (19, 20, 21, 22, 23, 24) destinés à permettre de former une ouverture (33, 34, 35) de la fermeture à glissière (14) entre ces curseurs supplémentaires (19, 20,21, 22, 23, 24), et, la fermeture à glissière (14) s'étend au moins essentiellement sur la totalité de la longueur du segment de housse supérieur (11).

2. Housse conforme à la revendication 1,
**caractérisée en ce que**
par rapport à l'extension en largeur la plus courte du premier segment de housse latéral (12), la fermeture à glissière (14) s'étend dans la zone centrale du premier segment de housse latérale (12).

3. Housse conforme à la revendication 1 ou 2,
**caractérisée en ce que**
par rapport à l'extension en largeur la plus courte du segment de housse supérieur (11), la fermeture à glissière (14) s'étend dans la zone centrale du segment de housse supérieur (11).

4. Housse conforme à l'une des revendications 1 à 3,
**caractérisée en ce que**
la fermeture à glissière (14) comprend au moins deux paires de curseurs supplémentaires (19, 20, 21, 22, 23, 24) pour permettre de former une ouverture respective (33, 34, 35) entre les deux curseurs supplémentaires (19, 20, 21, 22, 23, 24) de chacune des paires.

5. Housse conforme à la revendication 4,
**caractérisée en ce que**
la fermeture à glissière (14) comprend au moins trois paires de curseurs supplémentaires (19, 20, 21, 22, 23, 24) pour permettre de former une ouverture respective (33, 34, 35) entre les deux coulisseaux supplémentaires (19, 20, 21, 22, 23, 24) de chacune des paires.

6. Housse conforme à l'une des revendications 1 à 5,
**caractérisée en ce que**
la fermeture à glissière est réalisée sous la forme d'une fermeture à glissière (14) recouverte par une couture.

7. Housse conforme à l'une des revendications 1 à 6,
**caractérisée en ce que**
lorsque la fermeture à glissière (14) est fermée, celle-ci forme une gaine qui n'est ouverte que d'un seul côté.
